Europäisches Patentamt

European Patent Office

Office européen des brevets

(11) Veröffentlichungsnummer: **0 167 788**
**A2**

(12) # EUROPÄISCHE PATENTANMELDUNG

(21) Anmeldenummer: 85106715.7

(22) Anmeldetag: 31.05.85

(51) Int. Cl.⁴: **C 09 D 13/00**

(30) Priorität: 08.06.84 DE 8417493 U

(43) Veröffentlichungstag der Anmeldung:
15.01.86 Patentblatt 86/3

(84) Benannte Vertragsstaaten:
AT CH DE FR GB IT LI

(71) Anmelder: Johann Froescheis LYRA-Bleistift-Fabrik
GmbH & Co.
Grossweidenmühlstrasse 24
D-8500 Nürnberg 90(DE)

(72) Erfinder: Karg, Michael, Dipl.-Chem.
Kellerstrasse 8
D-8551 Gremsdorf(DE)

(74) Vertreter: Hafner, Dieter, Dr.rer.nat., Dipl.-Phys.
Ostendstrasse 132
D-8500 Nürnberg(DE)

(54) **Markiermine in Form einer Feststoffmine.**

(57) Um die Haltbarkeit einer Leuchtfarben-Feststoffmine bzw. des durch diese vorgenommenen Markierungsauftrages zu verbessern, ist diese -eine umhüllte oder nicht-umhüllte Mine für Schreib-, Markier- oder Zeichenzwecke in Form einer Feststoffmine, bestehend aus einem Bindemittel und darin eingelagerten, gleich verteilten Farbstoffen oder Pigmenten durch die Merkmalskombination gekennzeichnet, daß Farbstoff oder Pigment Tageslichtleuchtfarben sind und das Bindemittel aus wasserlöslichen oder wasserquellbaren Natur- oder Kunststoffen mit hohem Molekulargewicht besteht. Die erfindungsgemäße Mine ist in der Lage, längerfristige Lagerung auch bei höheren Lagertemperaturen, beispielsweise 150°C, zu überstehen, sie ist zäher und elastischer als herkömmliche Minen, weswegen auch dünnere Minendurchmesser hergestellt werden können.

FIG.1

Croydon Printing Company Ltd.

Beschreibung

Die Erfindung betrifft eine umhüllte oder nicht umhüllte Markiermine mit den Merkmalen des Anspruches 1 bzw. ein Verfahren zur Minenherstellung.

Aus DE-GM 78 30 645 ist ein Stift mit einer Mine aus einer Trägersubstanz bekanntgeworden, in welcher ein Tageslicht-Leuchtfarben-Pigment gleichmäßig verteilt ist. Bei der bekannten Mine handelt es sich somit um eine Feststoffmine, die sich insbesondere für Markierungszwecke eignet. Das in die Trägersubstanz eingelagerte und darin gleichmäßig verteilte Leuchtfarbenpigment ist geeignet, beispielsweise Stellen eines geschriebenen oder gedruckten Textes besonders augenfällig vom Untergrund abzuheben.

Der bekannte Stift zeichnet sich gegenüber den ebenfalls bekannten sogenannten "Flüssigmarkern" bereits durch eine bessere Haltbarkeit, Sparsamkeit und eine kompaktere, insbesondere schlankere Bauweise aus. Aufgrund der Trägersubstanz auf Wachsbasis ist der bekannte Stift aber insbesondere insofern nachteilig, als dessen Mine bei hohen Temperaturen (man denke an den Einsatz und die Lagerung in tropischen Ländern) relativ schnell erweicht, woraus ein hoher Minenverschleiß durch Abrieb der erweichten Minensubstanz resultiert. Auch ist ein vermehrtes Abbrechen oder Abknicken der bekannten Mine beim Einsatz in Ländern mit relativ hohen Temperaturen zu befürchten.

Darüber hinaus sind noch fluoreszierende Signierkreiden bekannt geworden, deren Auftragsfähigkeit auf glatten Unterlagen, wie Schreibpapier u.dgl. nur mangelhaft ist. Darüber hinaus neigt die mittels fluoreszierender Signierkreide vorgenommene Auftragsschicht zum Verwischen und ist deswegen nicht geeignet, eine wirklich dauerhafte·Markierung zur gewährleisten.

Der Neuerung liegt die Aufgabe zugrunde, die Haltbarkeit einer Leuchtfarben-Feststoffmine bzw. des durch diese vorgenommenen Markierungsauftrages zu verbessern. Diese Aufgabe wird durch die Kombination der kennzeichnenden Merkmale des Anspruches 1 gelöst.

Neuerungstragend ist der Stoffaustauch der Trägersubstanz von einer bekannten Wachsbasis in ein Bindemittel, das aus wasserlöslichen oder zumindest wasserquellbaren Natur- oder Kunststoffen mit hohem Molekulargewicht besteht oder zumindest solche Stoffe enthält. Eine Mine mit dem neuerungsgemäßen Bindemittel kann mehr oder minder schadlos eine längerfristige Lagerung auch bei hohen und höchsten Lagerungstemperaturen (beispielsweise bis 150$^{o}$C überstehen, ohne – nach einer gewissen Abkühlung – ihre vorteilhaften Gebrauchseigenschaften zu verlieren. Eine derartige Mine ist gegenüber Minen auf Wachsbasis auch sehr viel zäher und elastischer, wodurch die Gefahr des Minenbruchs bei starkem Aufdrücken und/oder rauhem Untergrund reduziert ist. Darüber hinaus lassen sich durch die neue Minenzusammensetzung auch dünnere Minendurchmesser herstellen, die entweder als Einleimminen in herkömmlichen Holz- oder Kunststoffummantelungen verwendet werden oder - was bislang mit Feststoffmarkierungsminen nicht möglich war - auch für Fallminenstifte unterschiedlichen Durchmessers verwendet werden können. Es ist auch möglich, die Minen als dicke (Durchmesser ca. 6-15 mm) "kreidenähnliche" Schreib- und Markierungsmittel zu verwenden. Auf Umhüllungen kann dann ganz verzichtet werden, wobei sich insbesondere die handfreundliche - weil durch die Körpertemperatur des Benutzers nicht erweichende - Minensubstanz auszeichnet.

Als besonders vorteilhaft für Haltbarkeit und Auftragsfähigkeit der Mine hat sich ein Bereich von 1-10 Gew.% des Bindemittels aus wasserlöslichen/wasserquellbaren Natur- oder Kunststoffen mit hohem Molekulargewicht herausgestellt, insbesondere ein Bereich von 3-5%. Vorteilhaft erweist sich darüber hinaus die chemische Resistenz von wasserlöslichen Nichtelektrolyten als Bindemittel. Besonders geeignet sind beispielsweise Bindemittel aus Naturstoffen wie Traganth und/oder Gummi arabicum und/oder Stärke. Als Bindemittel aus Naturstoffderivaten bieten sich Dextrin und/oder Celluloseäther, Stärkederivate, Cellulosederivate, Hydroxyäthylstärke und Dialdehydstärke an. An wasserlöslichen oder wasserquellbaren synthetischen Harzen können mit Vorteil Polyvinylalkohol, Polyacrylamid, Polyvinylpyrrolidon, Polyvinylmethyläther und/oder Polyethylenimid verwendet werden.

Durch Einbettung von Füllstoffen in Form von gleichmäßig verteilter Kreide und/oder Ton, Kaolin, Tonerde oder Kieselsäure in die Trägersubstanz kann die Festigkeit und Abriebfähigkeit der Mine gezielt verbessert und beeinflußt werden. Vorteilhaft erweist sich auch ein Zusatz von 5-40 Gew.% von Bienenwachs, Metallstearat, Cetylpalmitat u.dgl. zur Erhöhung der Haftfähigkeit des Farbauftrages.

Aufgrund der relativ hohen Eigenfestigkeit der Mine sind extrem dünne Minendurchmesser bis etwa 0,5 mm Durchmesser denkbar. Besonders vorteilhaft ist insbesondere eine Mine, deren Querschnitt flach rechteckig ist. Je nachdem, wie die Schreibspitze der Mine auf die Unterlage aufgesetzt wird, kann eine breite Markierung vorgenommen werden oder beispielsweise nur feinlinig unterstrichen werden.

Zusammengefaßt erscheint für die neuerungsgemäße Mine bedeutungsvoll zu sein, daß sie aufgrund ihrer besonders vorteilhaften, weitgehend temperaturunabhängigen mechanischen Eigenschaften sehr universell in Teilbereichen eingesetzt werden kann, für die bislang gezielt Spezialmarker wie Flüssigmarker, Wachsstifte und/oder Signierkreiden verwendet werden mußten.

Die Neuerung ist anhand eines in den Zeichnungsfiguren dargestellten Ausführungsbeispiels näher erläutert. Es zeigen:

Fig. 1 eine nicht ummantelte neuerungsgemäße Mine zur Verwendung in Fallminen- oder Drehminenstiften.

Fig. 2 eine in einen Holzstift eingeleimte Mine runden Querschnitts.

Fig. 3 eine in einen Holzstift eingeleimte Mine rechteckigen Querschnitts und

Fig. 4 eine neuerungsgemäße Mine in "Kreidenform".

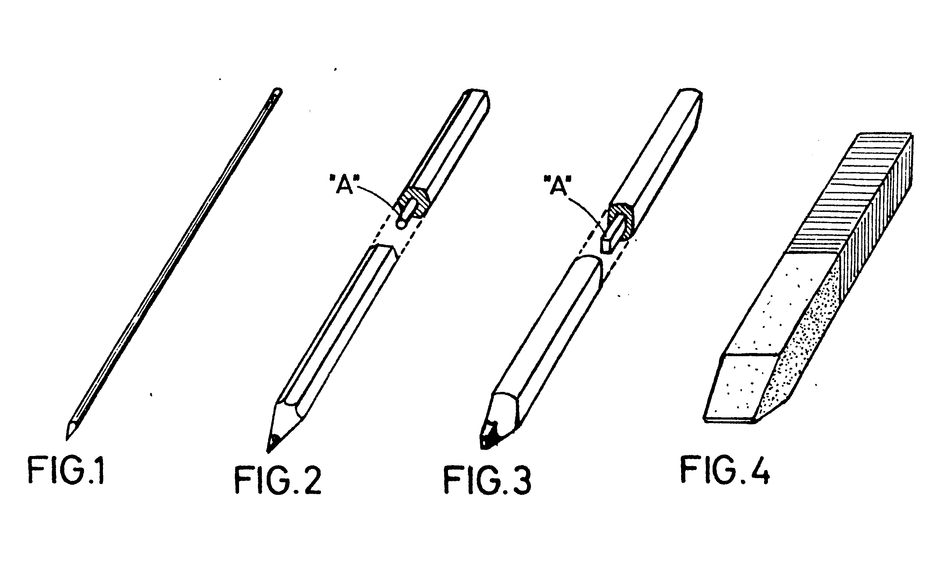

Die in Fig. 1 dargestellte Mine eignet sich für Minenträger (nicht dargestellt) mit einer Dreh- und/oder Klemmechanik. Sie hat einen Durchmesser von 2 - 4,5 mm. Darüber hinaus kann die Mine - sofern ihr Durchmesser an übliche Bleistiftminendurchmesser angepaßt ist - beispielsweise auch in Zirkeln u.dgl. verwendet werden.

Die in Fig. 2 dargestellte eingeleimte Mine hat - wie insbesondere der Aufbruch A in Fig. 2 zeigt - einen runden Querschnitt und einen Durchmesser von beispielsweise 2 - 4,5 mm. Die in Fig. 3 dargestellte Mine hat einen flachrechteckigen Minenquerschnitt von beispielsweise 2,5 x 5 mm und ist ebenfalls eine in einen Holzkörper eingeleimte Mine. Die Abmessungen der in Fig. 4 gezeigten Mine können beispielsweise 20 x 20 mm sein, darüber hinaus ist in Fig. 4 eine übliche Papier- oder Lackumhüllung angedeutet.

Rezepturbeispiele für die neuerungsgemäße Mine ergeben sich aus den nachstehenden vier besonders vorteilhaften Ausführungsbeispielen.

Beispiel 1:

10 Gew.-Teile gelbe Leuchtfarbe (Pigment Yellow 101)

25 Gew.-Teile Kaolin

25 Gew.-Teile Calciumstearat

1,5 Gew.-Teile Carboxymethylcellulose

1,5 Gew.-Teile Natriumstearat

7 Gew.-Teile Cetylpalmitat

Celluloseäther und Hilfsemulgator werden im Wasser aufgelöst, das geschmolzene Wachs eingerührt und das Ganze gemeinsam mit den restlichen Bestandteilen zu einer homogenen Masse verknetet.

Nach dem Strangpressen und Trocknen erhält man Minen, die sich besonders für die üblichen Schreibpapiere zum Markieren von Textstellen eignen.

Beispiel 2:

13,5 Gew.-Teile Pigment Yellow 101

10 Gew.-Teile Kaolin

6,5 Gew.-Teile pyrogene Kieselsäure

15 Gew.-Teile Calciumstearat

6 Gew.-Teile Methyl-Hydroxyäthylcellulose

20 Gew.-Teile Wasser

20 Gew.-Teile Bienenwachsersatz

10 Gew.-Teile Fettsäurepolyglykolester

Die Verarbeitung erfolgt wie im Beispiel 1. Derartige Minen sind nicht nur ausgezeichnet geeignet zur Textmarkierung auf glatten und glanzkaschierten Papieren (z.B. Prospektmaterial), sondern auch zur Kennzeichnung auf Glas, Kunststoff und glatten Keramik- und polierten Natursteinoberflächen. Außerdem ist sie von letzteren Materalien durch feuchtes Abwischen wieder mühelos entfernbar.

Beispiel 3:

7,5 Gew.-Teile Pigment Yellow 101

32 Gew.-Teile Calciumstearat

46,3 Gew.-Teile Kaolin

3,1 Gew.-Teile Methyl-Hydroxyäthylcellulose

31 Gew.-Teile Wasser

6,2 Gew.-Teile Stearinsäure

4,6 Gew.-Teile Japanwachsersatz (Erstarrungspunkt ca. 45° C, Säurezahl ca. 3, Verseifungszahl ca. 100, Penetration ca. 20)

Verarbeitung: Pigment, Calciumstearat, Kaolin und Cellulosederivat werden gut trocken vorgemischt, dann durch Zugabe des Wassers und weiteres Kneten zu einem gleichmäßigen zähen Teig verarbeitet. Anschließend wird der Mantel des Knettroges (z. B. mittels technischem Dampf) auf 75° C - 95° C erhitzt, wobei sich auch die weitergeknetete Masse entsprechend erwärmt und dabei per Verdunstung Feuchtigkeit verliert.

Wenn nach 1 - 3 Stunden die Feuchtigkeit bis auf einen Restgehalt von 16,5 ±1 % in der Mischung abgetrocknet ist, kann die geschmolzene Wachsphase mit einer Eigentemperatur von vorzugsweise 75° C - 95° C zugegeben werden. Es wird weitergeknetet und der Mantel des Knettroges nicht mehr weiter erhitzt, sondern intensiv gekühlt (z. B. mit Leitungswasser von 18° C).

Wenn die Masse auf weniger als 40° C heruntergekühlt ist, wird sie am besten noch zweimal über einen Dreiwalzenstuhl abgerieben zur besseren Verdichtung, Dispergierung und Homogenisierung. Anschließend wird in der üblichen Weise zu Minen stranggepreßt.

Beispiel 4 :

  3,7 Gew.-Teile Pigment Yellow 101

  0,4 Gew.-Teile Pigment Orange 5

30     Gew.-Teile Calciumstearat

50,1 Gew.-Teile Kaolin

  3,5 Gew.-Teile Methyl-Hydroxyäthylcellulose

29     Gew.-Teile Wasser

  7,2 Gew.-Teile Stearinsäure

  3,6 Gew.-Teile Japanwachsersatz

  1,5 Gew.-Teile Sorbitanmono-bis-tristearat mit angelagerten 4 bis 20 mol Ethylenoxid.

Die Verarbeitung erfolgt wie in Beispiel 3.

Zu allen vier Rezeptbeispielen ist anzumerken, daß das Bindemittel wirksam wird, indem die Gesamtmasse in feuchtem Zustand (insbesondere bei 10 % - 25 % Wassergehalt) stranggepreßt wird. Bei der anschließenden Trocknung verfestigt sich das Bindemittel und gewährleistet den hauptsächlichen Zusammenhalt der Minen.

Dipl.-Phys. Dr. D. Hafner
Patentanwalt
Ostendstraße 132
8500 Nürnberg 30
Telefon 0911/573031-32

C167788

I

Markiermine in Form einer Feststoffmine

PATENTANSPRÜCHE

1. Umhüllte oder nicht-umhüllte Markiermine in Form einer Feststoffmine zum Auftrag einer lasierenden Farbschicht auf eine insbesondere mit Schriftzeichen, Zeichnungsabschnitten, Drucken o. dgl. versehene Unterlage mit einer Trägersubstanz aus einem Bindemittel und darin eingelagerten gleichverteilten Farbstoffen oder Pigmenten sowie Füllstoffen,

gekennzeichnet durch
folgende Merkmalskombination:

a) Farbstoff oder Pigment sind Tageslicht-Leuchtfarben,

b) das Bindemittel besteht aus oder enthält wasserlösliche/wasserquellbare Natur- oder Kunststoffe mit hohem Molekulargewicht,

c) die Füllstoffe und etwaige Zusatzstoffe sind transparent abstreichende Stoffe.

2. Mine nach Anspruch 1,

   dadurch gekennzeichnet,

   daß sie 1-10 Gew.% des Bindemittels enthält.

3. Mine nach Anspruch 1 und 2,

   dadurch gekennzeichnet,

   daß sie 4 % ±1 % des Bindemittels enthält.

4. Mine nach einem der vorhergehenden Ansprüche,

   dadurch gekennzeichnet,

   daß das Bindemittel ein wasserlöslicher Nichtelektrolyt ist.

5. Mine nach einem der vorhergehenden Ansprüche,

   dadurch gekennzeichnet,

   daß das Bindemittel aus Naturstoffen wie Traganth und/oder Gummi arabicum und/oder Stärke besteht.

6.  Mine nach einem der Ansprüche 1 - 4,

    dadurch gekennzeichnet,

    daß das Bindemittel aus Naturstoffderivaten wie Dextrin und/oder Celluloseäther, Stärkederivaten, Cellulosederivaten (Carboxymethylcellulose), Hydroxyäthylstärke und/oder Dialdehydstärke besteht.

7.  Mine nach einem der vorhergehenden Ansprüche 1 - 4,

    dadurch gekennzeichnet,

    daß das Bindemittel aus wasserlöslichen oder wasserquellbaren synthetischen Harzen wie Polyvinylalkohol und/oder Polyacrylamid, Polyvinylpyrrolidon, Polyvinylmethyläther und/oder Polyethylenimid besteht.

8.  Mine nach einem der vorhergehenden Ansprüche,

    dadurch gekennzeichnet,

    daß die Füllstoffe als gleichverteilte Kreide und/oder Ton, Kaolin, Tonerde, Kieselsäure ausgebildet sind.

9.  Mine nach einem der vorhergehenden Ansprüche,

    dadurch gekennzeichnet,

    daß als Füllstoff mindestens 20 Gew.% Calcium-, Aluminium- oder Magnesiumstearat verwendet werden.

10. Mine nach einem der vorhergehenden Ansprüche,

    dadurch gekennzeichnet,

    daß die Trägersubstanz 5 - 40 Gew.% Esterwachse oder Fette mit einem Schmelzpunkt im Temperaturbereich von 35° C - 85° C, insbesondere Bienenwachs oder Cetylpalmitat enthält.

11. Mine nach einem der vorhergehenden Ansprüche,

    dadurch gekennzeichnet,

    daß das Bindemittel emulgatorische Haftstoffe auf Polyäthylenoxidbasis enthält.

12. Mine nach einem der vorhergehenden Ansprüche,

    dadurch gekennzeichnet,

    daß die Trägersubstanz 0,5 % - 3 % Alkali- und/oder Erdalkalimetallseife als weitere Emulgatoren enthält.

13. Mine nach einem der vorhergehenden Ansprüche,

dadurch gekennzeichnet,

daß der Gehalt an Calciumstearat, Magnesiumstearat oder Aluminiumstearat $\geq$ 20 Gew.-% oder
der Wachsgehalt $\geq$ 25 Gew.-% oder die Summe des
Stearat- und Wachsgehaltes $\geq$ 30 Gew.-% ist.

14. Verfahren zum Herstellen einer Markermine zum
Auftrag einer transparenten, leuchtenden Farbschicht auf eine Unterlage,

gekennzeichnet durch
folgende Verfahrensschritte:

Verwendung von 10 Gew.-Teilen gelbe Leuchtfarbe
(Pigment Yellow 101), 25 Gew.-Teilen Kaolin, 25
Gew.-Teilen Calciumstearat, 1,5 Gew.-Teilen
Carboxymethylcellulose, 1,5 Gew.-Teilen Natriumstearat, 7 Gew.-Teilen Cetylpalmitat,

Auflösen des Celluloseäthers und des Hilfsemulgators in Wasser,

Einrühren des geschmolzenen Wachses,

Verkneten der erhaltenen Mischung mit den restlichen Bestandteilen zu einer homogenen Masse, Strangpressen und Trocknung der Minen.

15. Verfahren zum Herstellen einer Markermine zum Auftrag einer transparenten, leuchtenden Farbschicht auf eine Unterlage,

gekennzeichnet durch
folgende Verfahrensschritte:

Verwendung von 13,5 Gew.-Teilen gelbe Leuchtfarbe (Pigment Yellow 101), 10 Gew.-Teilen Kaolin, 6,5 Gew.-Teilen pyrogene Kieselsäure, 15 Gew.-Teilen Calciumstearat, 6 Gew.-Teilen Methyl-Hydroxyäthylcellulose, 20 Gew.-Teile Wasser, 20 Gew.-Teile Bienenwachsersatz und 10 Gew.-Teilen Fettsäurepolyglykolester,

Auflösen des Celluloseäthers und des Hilfsemulgators in Wasser,

Einrühren des geschmolzenen Wachses,

Verkneten der erhaltenen Mischung mit den restlichen Bestandteilen zu einer homogenen Masse,

Strangpressen von Minen und anschließendes Trocknen.

16. Verfahren zum Herstellen einer Markermine zum Auftrag einer transparenten, leuchtenden Farbschicht auf eine Unterlage,

gekennzeichnet durch
folgende Verfahrensschritte:

Verwendung von 7,5 Gew.-Teilen gelbe Leuchtfarbe (Pigment Yellow 101), 32 Gew.-Teilen
Calciumstearat, 46,3 Gew.-Teilen Kaolin, 3,1
Gew.-Teilen Methyl-Hydroxyäthylcellulose, 31
Gew.-Teilen Wasser, 6,2 Gew.-Teilen Stearinsäure, 4,6 Gew.-Teilen Japanwachsersatz mit einem
Erstarrungspunkt von ca. 45° C, Säurezahl ca.
3, Verseifungszahl ca. 100, Penetration ca.
20),

trockenes Vormischen des Pigmentes, Calciumstearates, Kaolins und Cellulosederivates,

Zugabe von Wasser,

weiteres Kneten von einem gleichmäßigen, zähen
Teig,

Erhitzung des Knettrogmantels auf ca. 75° C -
95° C bei Erwärmung der Knetmasse und gleichzeitiger Feuchtigkeitsabgabe durch Verdunstung
bis auf einen Restgehalt von 16,5 ±5 % Restfeuchte,

Zugabe der geschmolzenen Wachsphase mit einer
Eigentemperatur von vorzugsweise 75° C - 95° C,

Weiterkneten der Masse unter Abkühlung des
Knettrogmantels (Intensivkühlung mit z. B.
Leitungswasser von 18° C),

Abreiben der Masse bei einer Temperatur von > 40°C zur Massenverdichtung, Dispergierung und Homogenisierung,

Strangpressen von Minen und Trocknen der Minen.

17. Verfahren zum Herstellen einer Markermine zum Auftrag einer transparenten, leuchtenden Farbschicht auf eine Unterlage,

gekennzeichnet durch
folgende Verfahrensschritte:

Verwendung von 3,7 Gew.-Teilen gelbe Leuchtfarbe (Pigment Yellow 101), 0,4 Gew.-Teilen Pigment Orange 5, 30 Gew.-Teilen Calciumstearat, 50,1 Gew.-Teilen Kaolin, 3,5 Gew.-Teilen Methyl-Hydroxyäthylcellulose, 29 Gew.-Teilen Wasser, 7,2 Gew.-Teilen Stearinsäure, 3,6 Gew.-Teilen Japanwachsersatz, 1,5 Gew.-Teilen Sorbitanmono-bis-tristearat mit angelagerten 4 bis 20 mol Ethylenoxid,

Verarbeitung wie in Anspruch 16.

FIG.1     FIG.2     FIG.3     FIG.4

"A"   "A"

0167788